# EUROPEAN PATENT APPLICATION

(11) **EP 4 008 645 A1**
(43) Date of publication of application: **08.06.2022**
(21) Application number: 20830814.8
(22) Date of filing: 25.06.2020
(51) Int. Cl.: B65D 5/42, B65D 81/18, H05B 6/10, A47J 47/14

(54) **IMPROVEMENTS TO INDIVIDUAL HEATING MEANS APPLIED TO BOXES, CHESTS, BACKPACKS, BAGS, THERMAL BAGS AND/OR THERMAL CHESTS FOR TRANSPORTING READY-TO-EAT FOOD**

(30) Priority: 28.06.2019 BR 102019013549; 13.06.2020 BR 132020011930
(71) Applicant: Guimarães, Marcelo, 05468-000 São Paulo (BR); Zara Pompeu, Armando, 047400-000 São Paulo (BR); Bonati Grimbergs Pompeu, Priscila, 04740-000 São Paulo (BR)
(72) Inventor: AUGUSTO DE FARIA NETO, Delfim, 01307-000 São Paulo (BR)
(74) Representative: Hörschler, Wolfram Johannes
(86) International application number: PCT/BR2020/050228
(87) International publication number: WO 2020/257902

(57) **Abstract**

It addresses to an individualized food heating means (10) (A1), more specifically to electromagnetic-induction heating to be applied to thermal 'Means of Transport' (20) of hot and/or cold food of the type delivered by the 'delivery' system, such as a bag, backpack, box, trunk, food transport carts, vehicles, pass through, among others, responsible for storing and transporting ready-to-eat foods such as pizzas, snacks, sfihas, meats, dumplings, among others; the Heating Means (10) comprises a thermal structure for electromagnetic-induction heating (10) installed in the internal parts of the means of Transport (20) and which is activated by one or more metal plate(s) (CP) installed (s) in the internal and/or external parts of the food packages (30), more precisely in the receptacles of said packages; the juxtaposition or approximation of the packages (30) provided with a plate with inductive capacity (CP) or the juxtaposition or approximation of the packages (30) on the plate with inductive capacity (CP') related to the Heating Means (10) arranged in the means of transport (20) activates the pre-heating and/or heating and/or cooking of the food (A1) arranged in said package (30) by induction thereof, thus enabling the maintenance of the temperature and quality of the food and/or partial and/or complete cooking of food, during transport to the final path and/or at the food production site, as well as at the place where it will be served and consumed.

## Description

### TECHNICAL FIELD OF THE INVENTION

The present patent of invention addresses to improvements to a food individualized heating means, more specifically, to an electromagnetic-induction heating to be applied to thermal 'Means of Transport' of hot and/or cold food of the type delivered by the 'delivery' system, such as bag, backpack, box, trunk, food transport carts, vehicles, 'pass through', among others, responsible for storing and transporting ready-to-eat foods such as pizzas, snacks, sfihas, meats, dumplings, among others; the Heating Means comprises a thermal structure for electromagnetic-induction heating installed in the internal parts of the means of Transport and which is activated by one or more metal plate(s) installed in the internal and/or external parts of the food package, more precisely in the receptacles of said packages of the micro corrugated cardboard, paperboard, natural or synthetic fibers, polymers, aluminum type, among others; the juxtaposition or approximation of the packages with the metal plate(s) in the Heating Means arranged in the Means of Transport provides for the pre-heating and/or heating and/or cooking of the food arranged in said package by induction of the same, thus enabling the maintenance of the temperature and quality of the food and/or the partial and/or complete cooking of the food, during the transportation to the final path and/or at the food production site, as well as at the place where it will be served and consumed.

### BACKGROUNDS OF THE INVENTION

It is known that the "delivery" system, more recently, had a sharp increase in demand, especially due not only to the valuation and optimization of time, but mainly due to the new habits of consumers through the use of mobile electronic devices (smartphones and others) and various delivery applications (APPs) that provide diversification in the offer of gastronomy with prompt service.

Despite the agility in requesting and receiving ready-to-eat foods that the 'APPs' provide, there is still a gap especially related to the differences in some food characteristics, such as temperature, crispness and others, differences that are easily noticed when the consumption of food is '*in-loco*' provided in restaurants or similar in relation to ready-to-eat food, provided by the 'delivery' system.

One of the main inconveniences related to the delivery of ready-to-eat foods is the thermal inefficiency of the package used to transport food. In general, conventional packages are made up of containers with lids, both made of corrugated cardboard or polystyrene (Isopor^{®}) or other materials and presented in different formats such as circular, octagonal, quadrangular, etc., and whose perimeter wall has height suitable for the accommodation of ready-to-eat food. Once the food is placed inside, the lid is closed and usually sealed with adhesive tape or a small lock in relation to the container.

Likewise, there are packages made of transparent (or not) polymer, also formed by a receptacle and lid devoid of any means of thermal retention of ready-to-eat foods.

Currently, ready-to-eat foods reserved in these and other package models are delivered to consumers in trunks, backpacks and other similar items which, in general, consist of coolers provided with handles to be placed on the backs of the deliverymen who, as a rule, use motorcycles, bicycles and even vehicles, aiming at delivering the product as quickly as possible.

Thinking of providing improvements to the consumer market, one of the applicants of the present request is the owner of document No. BR 10 2018 015412 5, which addresses to a package for packaging ready-to-eat pizza, savory snacks, sfihas, meats, among others, especially used in the 'delivery' or 'prompt-delivery' mode, and who, upon ascertaining the need to optimize the entire system, proposes numerous improvements in relation to the mentioned application, as he noted that when the delivery occurs in a more distant location or there is a greater number of deliveries along the path, the initial calorie is not maintained, falling back on the problem that was sought to be solved.

The current applicants, in constant studies and research have found that the temperature of the prepared product, as it leaves the oven, stove or otherwise, is different from the temperature of the food provided '*in-loco*' (table or counter near the preparation). For example, pizzas that are prepared in the local oven and are consumed at the place of preparation (restaurants or similar) reach the consumer at a temperature of approximately 90 °C. However, the same food, when supplied via 'delivery', through boxes or thermal bags/backpacks or even usual thermal trunks, reaches the consumer at a temperature well below that of preparation, that is, approximately at 35 to 40 °C, which can change the characteristics of ready-to-eat foods, such as crispness, texture, and even flavor. On the other hand, as will be shown below, food, for example pizza, when provided by the proposed electromagnetic-induction 'heating Assembly', after several tests, will reach the consumer at a temperature close to 80 °C, meaning a substantial optimization in relation to "delivery".

To further aggravate the inconvenience of the means of delivery currently used by "deliveries", it is common for these thermal bags to have a lid with a zipper and that, at each delivery, is opened, exposing the products to the external ambient temperature, cooperating for the premature cooling of ready-to-eat and transported foods.

Namely, these trunks, backpacks or coolers used to transport ready-to-eat foods are generally made with side walls, lid and base in polystyrene (Isopor^{®}) plates, which are externally lined with plastic or canvas, and they can have their interior compartmentalized by the provision of one or more shelves fitted in transversal cutouts made on the internal and side face of said box. Since Isopor^{®} is recognized as an element with characteristics that insulate the temperature, it is to be assumed that such thermal boxes or trunks, as they are presented, are sufficient to maintain the product's calorie during transport; however, it is known that it is not what happens, because the loss of calories occurs very quickly, especially if the box is opened several times during the delivery route.

Currently, some models of boxes, backpacks or trunks on the market, of the type used by deliverymen, have their internal portion covered with 'aluminum canvas'. However, despite this type of coating being widely used, the constant opening function of the lid in relation to the bag/cooler box or trunk, allows the thermal exchange with the environment to considerably reduce the internal temperature and, consequently, the cooling of the transported ready-to-eat foods.

### ANALYSIS OF THE STATE OF THE ART

In research carried out in specialized databases, documents were found referring to an individualized heating means applied in coolers for transporting ready-to-eat foods, such as document No. BR 20 2012 032105 5, which addresses to adapted trunks transported by motorcycles for delivering hot food to customers' homes, being heated through electrical resistors that are connected to the batteries. The trunks are made of fiberglass and installed on motorcycles. Trunks can be of two types. The first has two compartments, the lower one, which has all the electrical part, a specially developed automotive battery, connection and two (female) sockets to receive the (male) plug of the heaters by electrical resistance, and the upper one, which is separated from the lower one by a fiberglass partition, having the space to place said heaters and the food. The second type of trunk is made of fiberglass, smaller in size, built with plastic-coated thermal insulators, with the same electrical resistance heaters (internally); this trunk is attached to the bikers' backs and a wire comes out as a (male) plug to connect to the energy, which is generated by a battery, which is in a fiber box that has all the electrical wiring and two (female) sockets; this battery is attached to the motorcycle and provides access to energy for the heaters that are close to the riders' backs.

Document No. PI 0804852-5 addresses to a set formed by a bag that can be used individually and/or a set with a trunk for transport for packaging pre-packaged pizza and related items, with heat refractory property whose heating is provided by the existence of plates arranged in the bag itself with a plug that allows the connection to the trunk and its connection through internal connector points therein on the base of which a converter is installed, capable of making usable the energy coming from the motor of a motorcycle, in order to transport food at the ideal temperature for consumption.

Document No. MU 9102586-9 addresses to a heated/cooled box by 'Peltier' effect for Motorcycles, and it refers to an accessory whose structure is composed of a box or trunk made of plastic, fiber or any other material, thermally insulated by Isopor^{®}, plastic, polyurethane, glass wool, rock wool or any other material that can be used in order to insulate the interior of the box in order to reduce the thermal exchange between the interior and exterior of the box, 'Peltier' cell, heat sinks, coolers, electronic circuit, air vents, temperature selector switches (hot/cold), on/off buttons and 127/220 V or 12 V power, and the internal part of this box or fiber trunk can be heated/ cooled by conduction, convection and/or radiation, through a heat-conducting metal plate or even through forced ventilation through the cooler. The heated/cooled box by the 'Peltier' effect for Motorcycles, connected to the electrical system (12V) of the motorcycle, can have a model variation with attached battery, selecting the temperature, hot or cold, through the temperature selector switches and the system is activated through the on/off buttons, which are found on the top of the box or fiber trunk. In this way, an electronic circuit and the heat sink will be activated, which will maintain the box at the desired temperature, as the 'Peltier' cell and the cooler will be activated according to the desired option.

The aforementioned documents, despite belonging to the same field of application, differ from the present invention in question, as will be seen below, thus ensuring that it fully meets the legal requirements of patentability.

### OBJECTIVES OF THE INVENTION

It is the objective of the present invention to present a Food Heating Means applied in Means of Transport that uses the effect of electromagnetic induction and can be applied in one or all compartments of said Means of Transport and also in food package. The proximity of one to the other activates the heating circuit of the metal plate(s) installed in the Means of Transport, raising the temperature of the compartment in order to maintain it warm and/or perform partial and/or full cooking of the food for as long as it is accommodated inside the Means of Transport.

It is another objective of this invention to present an electromagnetic-induction heating Means aiming at delivering the ready-to-eat food at a temperature closest to the temperature that is offered when consuming '*in-loco*', that is, for example, a pizza that would be offered on the table or counter of the preparation place at a temperature of 90 °C, when transported via 'delivery' through the innovative Means of Transport, will reach the final consumer at a temperature close to 80 °C, in addition to preserving the essential characteristics of the ready-to-eat food such as crispness, moisture, texture, etc.

It is also an objective of this invention to present an electromagnetic-induction heating Means installed in one or more compartments of the Means of Transport that, when there is the physical presence of metal plate(s) stored in the Means of Transport and/or in Food packages, the same will be heated. The compartments and/or packages that do not have the electromagnetic-induction device in question are maintained at cold or ambient temperature, thus allowing the transport of various foods in conventional packages, such as made in cardboard, Isopor^{®}, plastic or other, that do not require heating, for example, salads, 'Temakis', beverages or others. The fact that each compartment is individualized allows the transfer of calories from one to the other to not occur.

Another objective of this invention is to present an electromagnetic-induction heating Means applied in Means of Transporting food, whose elements responsible for activating the electromagnetic-induction system, such as electric battery, logic circuit board, connector(s), among others, are placed on the walls or shelves of the means of Transport and will receive electrical power from other batteries, such as those of the automotive vehicle, motorcycle type, electric bicycle, electric scooter or other external source of energy.

It is also an objective of the invention to present an electromagnetic-induction heating Means applied in isothermal and impermeable compartments, so that possible leaks are isolated and do not contaminate other ready-to-eat foods transported in the same Means of transport.

Likewise, another objective of the invention is to present a constructive variation that includes the predictability of fully embedding the entire electromagnetic-induction heating device in one or more internal parts of the Means of Transport, as well as associating the same with a corresponding presence sensor capable of activating the heating means automatically when the conventional package with the food to be transported is present.

Another objective arising from the abovementioned constructive variation is to present an external compartment for mounting a source of energy such as rechargeable batteries, electromagnetic-induction circuits and ventilation fan for feeding the electromagnetic-induction coils.

### DESCRIPTION OF THE FIGURES

To complement the present description in order to obtain a better understanding of the features of the present invention and in accordance with a preferential practical embodiment of the same, the attached description is accompanied by a set of drawings, where, in an exemplified manner, although not limiting, there is represented its operation:

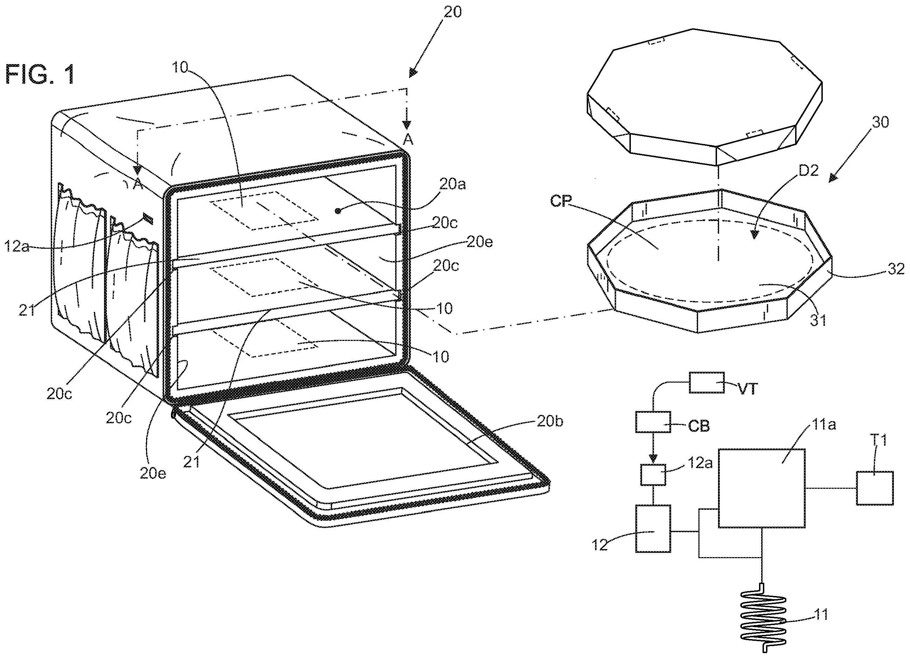

Figure 1 represents an illustrative and perspective view, but without being restrictive, of a Means of Transport, for example in the form of a thermal backpack, which is illustrated with the lid open and provided with three compartments, each provided with electromagnetic-induction heating Means and powered by electric energy from an external battery (of the transport vehicle) or one or more rechargeable electric batteries, preferably embedded in the compartment(s) of the Means of Transport; for the activation of the heating Means of any of the compartments of the innovative Means of Transport, it is foreseen that the food package (in this example, a pizza box) is provided with the induction drive plate, allowing the package deposit in the compartment to activate the heating Means and maintain the food warm throughout the transport period;

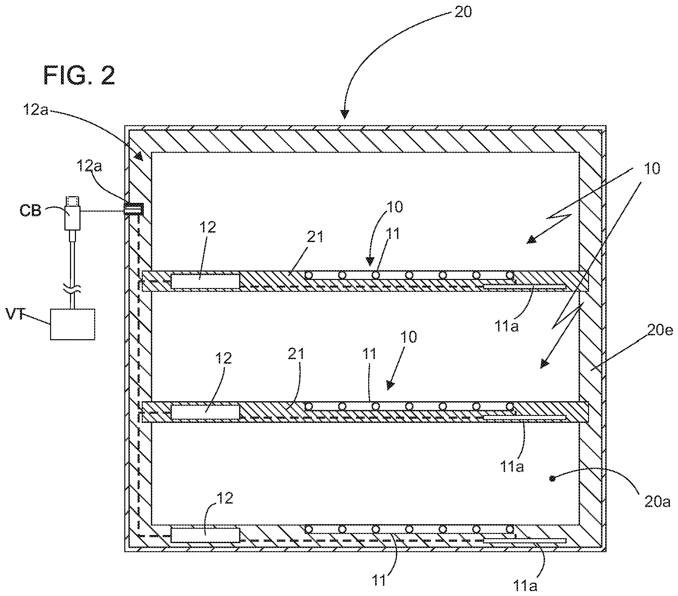

Figure 2 discloses a schematic view of the means of transport, in the form of a thermal backpack, a second longitudinal section A.A illustrated in the previous figure, illustrating the components of the electromagnetic-induction heating system applied to the shelves of the compartments;
Figure 3 discloses the same longitudinal section A.A illustrating the activation of the heating Means, provided for in the Means of Transport, by the presence of the Food package in which the Metal Plate (s) is (are) contained, as well as illustrating a compartment that, although provided with the Heating means, is cooled, since the food package does not include the metal plate, consequently, without activating the heating, thus allowing the same means of transport to be used to transport food or similar items that do not require heating; and
Figure 4 represents another view in longitudinal section A.A, as in Figures 2 and 3, representing a Means of Transport in the form of a thermal backpack with a constructive variation that, in this case, presents the heating means installed on the side walls of the means of Transport in order to meet alternative packages with metal plates arranged on the sides;
Figure 5 shows a rear view of a food transport vehicle, illustrating the arrangement of shelves capable of receiving the Heating Mean that will work on the same principles described in the previous items;
Figure 6 represents a variation of the heating Means illustrating the means of transporting ready-to-eat and/or unfinished food, where the juxtaposition of the metal plate(s) is performed on the electromagnetic-induction coils and respective compartment for batteries;
Figure 6A illustrates a rear perspective view of the means of transporting ready-to-eat and/or not- ready-to-eat food, illustrating a variation of the arrangement of the battery compartment, electromagnetic-induction circuits, control systems, among other components; and
Figure 7 discloses a longitudinal section A.A indicated in Figure 1 illustrating the now-improved individualized heating means.

### DESCRIPTION OF THE INVENTION

With reference to the illustrated drawings, the present patent of invention refers to an IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, more precisely it is a heating means (10) applied in a Means of Transport (20), such as a backpack or cooler and/or thermal truck or another of the type used to transport food (A1), especially of the type for "delivery", which usually includes a package (30) with container and lid. Said Means of Transport (20), in its preferred constructive version in the form of a backpack or cooler, can be made of polystyrene or other suitable material, coated or not with aluminum canvas or other suitable material, and being formed by a hollow receptacle (20a), in order to form a main opening for mounting a hinged lid (20b). On at least two internal faces of the receptacle (20a) there can be made recesses (20c) that create rails for the assembly of corresponding shelves (21) configuring compartments for the accommodation of packages (30) or others, as well as various beverage containers.

According to the present invention, the shelves (21) and/or side (20e) or bottom walls of the receptacle (20a) of the Means of Transport (20) have the installation of at least one electromagnetic-induction heating Means (10), which remains embedded in said internal parts of the Means of Transport (20) and which heats the metal plate(s) (CP) embedded in the package receptacle (30), either on the lower base (31) and/or on the side faces (32) of said receptacle for transporting hot food (A1). As soon as the package (30) with the metal plate(s) (CP) is supported on or approaches the Heating Means (10) inside the means of transport (20), the electromagnetic induction activates the heating of said metal plate(s) (CP) of the package (30) thus immediately heating the food (A1) that, in turn, is maintained warm at all times in which it is accommodated inside the Means of Transport (20).

Said Heating Means (10), in a preferential constructive version, is comprised of an magnetic-induction circuit (11a) with the control adjusted within a temperature range (T1), providing uniform standards for the maintenance of food heating (A1); said circuit (11a) is coupled to a spiral (11), both powered by an electric battery (12) through connector(s) (12a) installed next to each shelf (21) and/or side or bottom walls of the receptacle (20a), and said connector(s) (12a) are exposed on the outside of the box (20) for coupling feeding cables (CB), in turn, connected to transport vehicles (VT) such as electric bicycle, motorcycle, electric scooter or other type of suitable electrical power.

The individual activation of each package (30) with one or more Metal Sheet(s) (CP) in relation to the electromagnetic-induction heating Means (10), installed in one or more internal parts of the means of transport (20) is capable of maintaining the heating of the food (A1) during the period in which the Metal Plate(s) (CP) of the package(s) (30) remain juxtaposed and/or approximated to said heating means (10) of the Means of transport (20), enabling the transport of food (A1) in a heating situation. If the temperature control (T1) of the circuit (11a) allows it to be adjusted, the Heating Means (10) can act as the conclusion of the cooking of the food (A1) until it is delivered to the consumer.

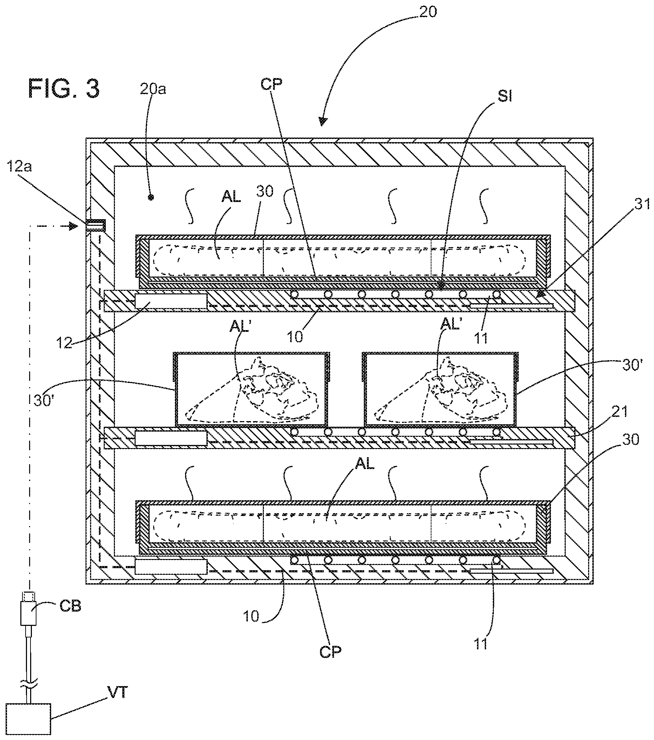

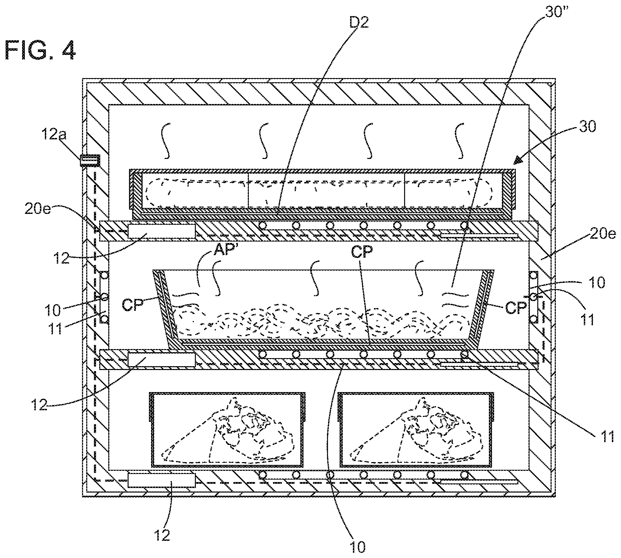

In a constructive option (see figures 3 and 4), the Means of transport (20) is provided with heating Means (10) in the internal parts of the receptacle (20a) and one or more packages (30) have the base of the receptacle provided with metal plate(s) (CP) that maintain the Heating Means (10) activated at a predetermined temperature. One or more packages (30'), however, are devoid of metal plate(s) (CP) in their receptacles, thus not activating the electromagnetic induction of the Heating Means (10) of the shelf (21), or the base of the Means of Transport (20), maintaining the food (A1') cold or at room temperature.

In a second constructive version (see figure 4), the side walls (20e) of each Means of Transport (20), in addition to the shelves, receive heating Means (10) activated by metal plate(s) (CP) installed on the peripheral wall(s) of the package (30'), in order to configure a perimeter heating for heating various portions such as dumplings, chicken pieces, etc.

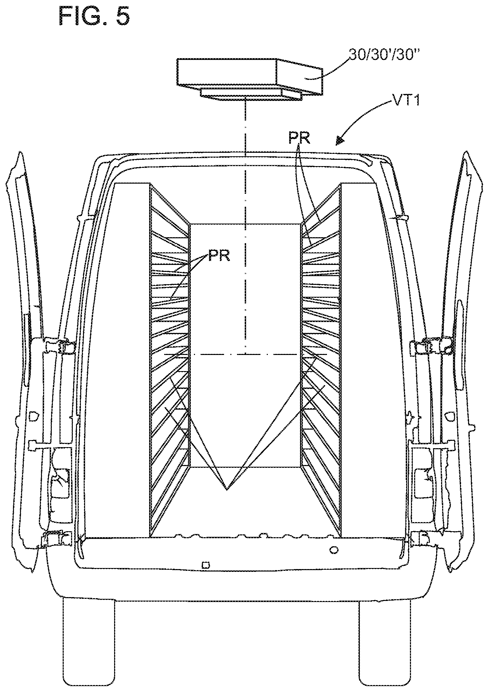

In a third constructive version (see figure 5), transport vehicles (VT1) can be provided with one or more compartments whose shelves (PR) and/or side walls can receive heating Means (10) by the activation of Metal Plate(s) (CP) installed in packages (30)/(30') or (30") for heating (or not) various foods (A1) such as, for example, daily meals. In case the heating Means (10) are distributed on the vehicle shelves (VT1), there will be an on/off switch to activate the same.

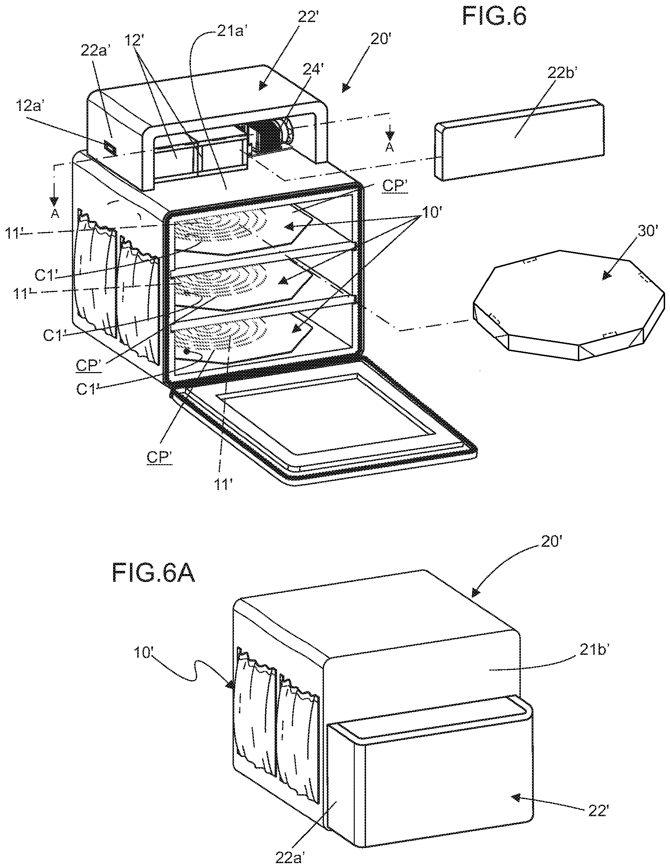

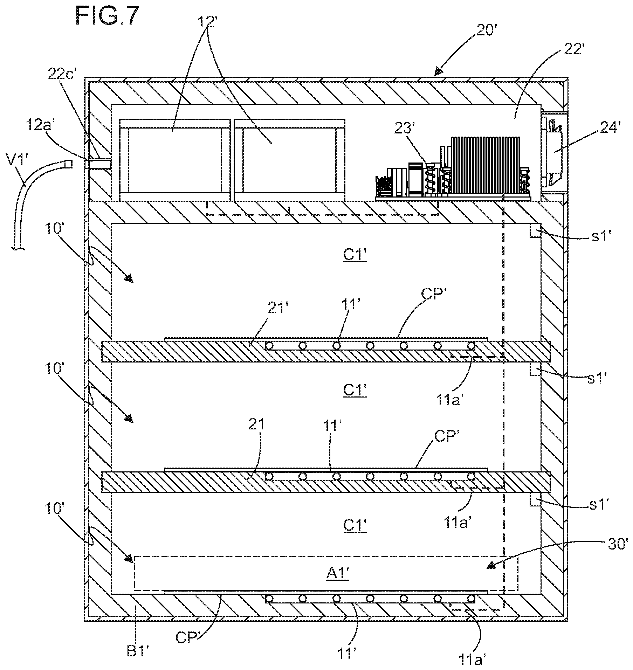

In a fourth constructive variation (see figures 6 to 7), said heating Means (10') is formed by a metal plate with inductive capacity (CP') juxtaposed to an electromagnetic-induction coil (11') and a cable connection (11a') connected to the electromagnetic-induction circuit (23'). Said heating means (10) provides that the electromagnetic-induction coil (11') and the connecting cable of the electromagnetic circuit (11a') remain embedded in at least one shelf, while the plate with inductive capacity (CP') is arranged coplanar to the upper face of said shelf (21'). This application can be reproduced on the internal lower base (B1') of the means of transport (20') or, even on at least one internal side face of said means of transport (20').

On the plate with inductive capacity (CP') or juxtaposed to it, the conventional package (30') containing ready-to-eat, semi-ready-to-eat or natural food (A1') is positioned so that it can be preheated and/or heated and/or cooked during the period in which said conventional package (30') remains accommodated inside the Means of Transport (20') and in contact with the heating means (10').

The on-off control of the electromagnetic-induction circuit (23') is commanded by at least one presence sensor (s1') installed inside at least one compartment (C1') of the means of transport (20'), sensor (s1') which detects when the conventional package (30') is positioned in at least one of said compartments (C1').

Said means of transport (20') includes an external supplementary compartment (22') shaped such as a box (22a') with a lid (22b') that can be arranged in the upper portion (21a') or rear wall (21b') of said means of transport (20'). In this supplementary external compartment (22') there are accommodated one or more energy sources (12') in the form of electric or electronic batteries, a set of electromagnetic circuits (23') for controlling the electromagnetic-induction coil(s) (11'), and at least one ventilation means (24'). The box includes one or more holes (22c') for mounting connectors (12a') and connecting cables (11a'), between the electromagnetic-induction circuit (23) and the electromagnetic-induction coils (11'), in addition to the connector hole for charging energy supplies.

It is true that when the present invention is put into practice, modifications may be introduced regarding certain details of construction and shape, without this implying departing from the fundamental principles that are clearly substantiated in the set of claims, remaining thus understood that the terminology used was not intended as a limitation.

## Claims

1. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, more precisely, it addresses to a heating Means (10) applied to a Means of Transport (20) for transporting food (A1) of the '*delivery*' type, with one or more shelves capable of receiving at least one package (30) with a container and a lid; ***characterized* in that** the Means of Transport (20) comprises:
- at least one electromagnetic-induction heating Means (10) embedded in at least one shelf (21) and/or side (20e) or bottom walls of the receptacle (20a);
- at least one plate with inductive capacity (CP) applied in at least one package (30);
- at least one plate with inductive capacity (CP') arranged attached to the heating means (10);
wherein the arrangement of the package receptacle (30) close to or over the heating means (10) triggers the magnetic-induction circuit (11a) with a temperature control (T1) transferring the calorie generated by the heating means (10) to the food (A1) stored inside the package (30) during the period in which the same is packaged in the means of transport (20).

2. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 1, **characterized in that** the electromagnetic-induction Heating Means (10) arranged inside the Means of Transport (20) is maintained activated by the juxtaposition or approximation of one or more metal plate(s) (CP) arranged in the package (30) with food (A1).

3. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 1 and in a preferred constructive version, **characterized in that** the Heating Means (10) comprises a magnetic-induction circuit (11a) with temperature control (T1) for food heating maintenance (A1); said circuit (11a) is coupled to a spiral (11), both powered by an electric battery (12) through connector(s) (12a) installed next to each shelf (21) and/or side or bottom walls of the receptacle (20a), and said connector(s) (12a) are exposed on the outside of the box (20) for coupling feeding cables (CB), in turn, connected to transport vehicles (VT) such as electric bicycle, motorcycle, electric scooter or other type of suitable electrical power.

4. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 1 and in a constructive option, **characterized in that** one or more packages (30') with food (A1') of the type without metal plate (s) (CP) in their receptacles maintain inactive the Heating Means (10) of the Means of Transport (20); the food (A1') is maintained cold or at ambient temperature.

5. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 1 and in a second constructive version, **characterized in that** the side walls (20e), in addition to the shelves of the Means of Transport (20), receive Heating Means (10) activated by metal plate(s) (CP) installed on the peripheral wall(s) of the package (30').

6. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 1 and 5, **characterized in that** the electromagnetic-induction Heating Means (10) cover the base and the side of the packages (30').

7. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 1 and in a third constructive version, **characterized in that** transport vehicles (VT1) of the van type or similar are provided with one or more compartments whose shelves (PR) and/or side walls are provided with electromagnetic-induction Heating Means (10) activated by metal plate(s) arranged in different packages (30") for heating different foods (A1).

8. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 1 and in a fourth constructive version, **characterized in that** the electromagnetic-induction heating means (10') comprises a device embedded in at least one of the internal parts of at least one compartment (C1') of the means of transport (20'); the heating means (10') is formed by a plate with inductive capacity (CP') juxtaposed to an electromagnetic coil (11') and respective connection cable (11a'); over the plate with inductive capacity (CP') or juxtaposed to it, the conventional package (30') containing ready-to-eat, semi-ready or natural food (A1') is positioned; the on-off control of the electromagnetic-induction circuit (23') is commanded by at least one presence sensor (s1') installed inside at least one compartment (C1') of the means of transport (20'); said means of transport (20') includes an external supplementary compartment (22') containing one or more energy sources (12') in the form of electric or electronic batteries, an electromagnetic-induction circuit (23'), connecting cables (11a'), and at least one ventilation means (24'); the box includes one or more holes (22c') for mounting connectors (12a'), connecting cables (11a') and charging connectors of the energy sources.

9. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 8 and in a constructive option in which the heating means (10') is embedded in a shelf (21'), **characterized in that** a plate with inductive capacity (CP') is arranged coplanar to the upper face of said shelf (21').

10. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 8 and in a constructive option in which the heating means (10) is embedded in the base (B1') of the means of transport (20'), **characterized in that** a plate with inductive capacity (CP') is arranged coplanar to the upper face of said internal lower base (B1').

11. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 8 and in an alternative option, **characterized in that** a plate with inductive capacity (CP') is co-planarly arranged on at least one internal side of the said means of transport (20') remaining juxtaposed to the electromagnetic-induction coil (11'), in turn, embedded in the respective internal side face of the means of transport (20') .

12. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 8, **characterized in that** the additional external compartment (22') is formed by a box (22a') with a lid (22b') that may be arranged in the upper portion (21a').

13. IMPROVEMENTS TO INDIVIDUALIZED HEATING MEANS APPLIED TO A BOX, TRUNK, BACKPACK, BAG, THERMAL VANITY CASE AND/OR THERMAL TRUNK FOR TRANSPORTATION OF READY-TO-EAT FOOD, according to claim 8 and alternatively according to claim 12, **characterized in that** the external supplementary compartment (22') is formed by a box (22a') with a lid (22b') which can be arranged on the rear wall (21b') of said means of transport (20').
